# FASCICULE DE BREVET EUROPEEN

(11) **EP 1 632 387 B1**
(45) Date de publication et mention de la délivrance du brevet: **19.12.2007**
(21) Numéro de dépôt: 05300711.8
(22) Date de dépôt: 02.09.2005
(51) Int. Cl.: B60N 2/015, E05B 63/12

(54) **Dispositif et procédé de fixation d'un siège de véhicule automobile**
Vorrichtung und Verfahren zur Befestigung eines Kraftfahrzeugsitzes.
Apparatus and method for fastening an automotive vehicle seat.

(30) Priorité: 06.09.2004 FR 0409393
(43) Date de publication de la demande: 08.03.2006
(73) Titulaire: Renault SAS, 92100 Boulogne Billancourt (FR)
(72) Inventeur: Lallement, Stéphane, 28130, PIERRES (FR)

(56) Documents cités:
- FR-A- 2 699 973
- FR-A- 2 807 366
- FR-A- 2 815 911

## Description

La présente invention concerne un dispositif de fixation d'un siège automobile.

Le document FR-A-2 699 973 décrit un dispositif de fixation d'un siège de véhicule automobile, du type verrou, qui comporte un pêne qui comprend un corps creux, sensiblement cylindrique, qui contient une bille mobile entre une position dite « saillante » et une position dite « rentrée » et une aiguille mettant en mouvement cette bille. Ce pêne coopère avec un orifice ménagé dans une gâche qui est fixée sur le sol d'un véhicule automobile, le pêne étant, lui, fixé sur un support solidaire du dessous du siège. Lorsque la bille est dans sa position dite « saillante » et que le pêne est logé dans la gâche, le dispositif est verrouillé, la bille venant en butée contre le bord de l'orifice de la gâche ; le pêne ne peut donc pas être séparé de la gâche. En revanche, lorsque la bille est déplacée dans sa seconde position dite « rentrée », à l'intérieur du corps creux, le pêne peut être retiré de la gâche. L'aiguille est montée mobile dans le corps creux du pêne de manière à pousser la bille dans sa position « saillante » ou au contraire à lui permettre de rentrer dans le corps du pêne.

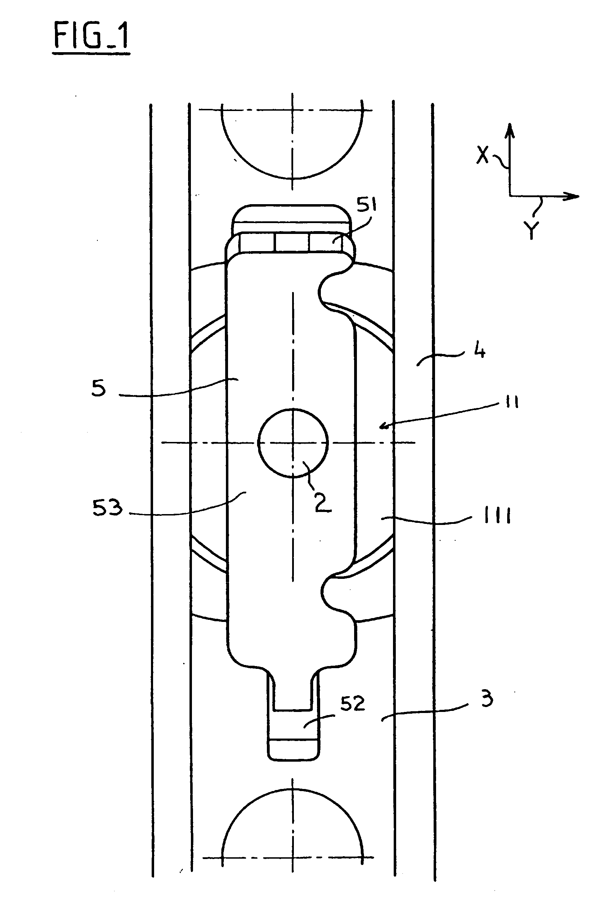

Ce type de verrou peut être muni d'un système de déverrouillage qui actionne l'aiguille de manière à permettre le mouvement de la bille de sa position dite « saillante », vers l'intérieur du corps du pêne. La figure 1 ci-jointe représente une vue du dessus d'un élément de fixation connu et tel que précité, qui comporte, en outre, un système de déverrouillage. Sur la figure 1, l'élément de fixation 1 comporte un pêne 11 qui est monté sur un support 3. Cet élément de fixation 1 est fixé dans une glissière 4 qui le bloque selon sa largeur (c'est-à-dire la direction Y). Ce pêne 11 comporte un corps creux cylindrique 111 qui contient l'aiguille précitée 2. L'aiguille 2 peut être mise en mouvement par une patte de déverrouillage 5. Cette patte de déverrouillage 5 comporte à une de ses extrémités, une gâchette de déverrouillage 51 avec laquelle vient coopérer un palonnier non représenté. A l'autre extrémité de la patte de déverrouillage 5 est disposé l'index 52 de la gâchette. La patte de déverrouillage 5 comporte également une partie d'actionnement 53 qui coopère avec l'aiguille 2 de manière la mettre en mouvement dans le corps creux 111, lorsque la patte de déverrouillage 5 est actionnée par le palonnier précité. La patte de déverrouillage 5 est de plus mobile en rotation autour de l'index 52, dans le plan du support 3, c'est-à-dire dans un plan perpendiculaire au pêne 11.

En général, le siège comporte sur sa face inférieure deux éléments de fixation tels que précités. Le support 3 du pêne 11 est fixé dans une glissière selon sa largeur, c'est-à-dire que chaque support 3 ne peut bouger que dans une seule direction parallèle à sa longueur (i.e. la direction X). Or il est fréquent qu'il faille rattraper les jeux existants entre deux verrous, ceux-ci n'étant pas placés de manière parfaitement symétrique sous le siège et le plancher n'étant par parfaitement plan. Pour ce faire, il est connu de laisser un support libre selon deux directions ce qui permet d'ajuster sa position par rapport à l'autre verrou qui n'a pas de degré de liberté ou qui n'a qu'un seul degré de liberté selon sa longueur. Le support fixé avec jeu est ensuite fixé sans jeu dans la position adéquate. Il est néanmoins nécessaire d'avoir dans ce cas une liaison rigide entre les deux verrous afin de rattraper les efforts de coulissement. Cette liaison est souvent constituée d'une traverse qui supporte les verrous ou qui est ajoutée lors du montage du siège afin d'assurer la géométrie au moment de la pose des verrous. Cette liaison rigide rend la pose des verrous longue et fastidieuse.

Par ailleurs, si lors du montage, les contraintes sont trop fortes, le pêne risque de ne pas s'emboîter correctement dans la gâche et la bille ne peut plus occuper sa position saillante qui verrouille le pêne. Il y a donc un problème de fixation du siège qui peut s'avérer extrêmement dangereux dans un véhicule en mouvement.

De même, si la patte de déverrouillage est mal placée, le palonnier ne peut pas s'engager dans la patte de déverrouillage et le verrou ne peut donc pas être débloqué.

Le document FR-A-2807366 décrit un dispositif de fixation selon le préambule de la revendication 1.

Le but de la présente invention est de proposer un dispositif de fixation d'un siège de véhicule automobile tel que précité qui résout tous ou partie des inconvénients précités liés aux dispositifs existants.

Ce but est atteint au moyen d'un dispositif de fixation d'un siège de véhicule automobile qui comporte au moins un premier élément de fixation du type comportant un pêne, destiné à être fixé sous le siège, et une gâche destinée à être fixée sur le plancher du véhicule et comprenant un orifice avec lequel peut coopérer le pêne ; le pêne comportant un corps creux contenant au moins une bille et une aiguille, la bille est mobile entre une position de verrouillage dans laquelle elle bloque le retrait du pêne hors de l'orifice de la gâche, lorsque le pêne est emboîté dans la gâche, et une position de déverrouillage dans laquelle le pêne peut être séparé de la gâche, l'aiguille étant apte faire passer la bille d'une des positions de verrouillage et de déverrouillage dans l'autre, le dispositif comporte, en outre, une patte de déverrouillage qui s'étend dans un plan sensiblement perpendiculaire au corps creux et qui comporte une partie d'actionnement qui coopère avec l'aiguille et une gâchette de déverrouillage apte à coopérer avec un élément d'entraînement pour mouvoir cette aiguille. La patte de déverrouillage étant montée mobile en rotation, dans ce plan perpendiculaire au corps creux, autour d'un pivot, de manière caractéristique, selon l'invention, la gâchette de déverrouillage est disposée entre la partie d'actionnement et ce pivot, moyennant quoi, lorsque l'élément de fixation est fixé sous le siège avec un jeu selon deux directions orthogonales contenues dans le plan précité, le déplacement angulaire de la gâchette de déverrouillage autour du pivot, qui est engendré par le déplacement en translation du pêne, est limité ce qui permet à la gâchette de déverrouillage de rester dans une position lui permettant de coopérer sûrement avec l'élément d'entraînement.

L'élément de fixation du dispositif de la présente invention peut être fixé avec jeu selon deux directions perpendiculaires contenues dans le plan de la face inférieure du siège. Ceci permet de rattraper les jeux au niveau du plancher entre deux éléments de fixation. Par ailleurs, du fait de la disposition particulière de la gâchette de déverrouillage sur la patte de déverrouillage, la gâchette reste dans une position telle que le palonnier au tout autre élément d'entraînement peut effectivement coopérer avec elle pour déverrouiller l'élément de fixation.

Selon une variante particulière, la gâchette de déverrouillage est disposée au niveau du pivot, ce qui limite au maximum son déplacement angulaire lors d'un mouvement de la patte de déverrouillage autour du pivot.

La disposition du pivot n'est pas limitée selon l'invention. Ainsi, il peut être disposé à une extrémité de la patte de déverrouillage.

De même, la partie d'actionnement peut être disposée à une extrémité de la patte de déverrouillage ce qui réduit l'encombrement de cette dernière.

L'élément de fixation peut être fixé dans une glissière qui est fixée sans jeu sous le siège.

Dans ce cas, cette glissière a de préférence, des dimensions suffisantes pour permettre la fixation de l'élément de fixation avec un jeu selon deux directions perpendiculaires, contenues dans le plan de la glissière.

L'élément de fixation peut également comporter un support sur lequel est disposé le corps creux du pêne.

Selon un mode de réalisation particulier, le dispositif de l'invention comporte en outre un second élément de fixation du type comportant un pêne et une gâche, le pêne comportant un corps creux contenant une bille et une aiguille, la bille étant mobile entre une position de verrouillage dans laquelle la bille bloque le retrait du pêne emboîté dans la gâche, lorsque le pêne coopère avec la gâche, et une position de déverrouillage dans laquelle le pêne peut être séparé de la gâche, l'aiguille étant apte à mettre en mouvement la bille entre les positions de verrouillage et déverrouillage. Ce second élément de fixation est fixé sous le siège, sans jeu.

La fixation avec jeu du premier élément de fixation permet à elle seule, de rattraper les écarts de positions des éléments de fixation. Le second élément de fixation peut être fixé sans jeu ce qui lui évite les problèmes de mauvaise position de la gâchette précités.

Le second élément de fixation peut également être fixé dans une glissière sous le siège.

La présente invention concerne également un procédé de montage d'un dispositif de fixation selon l'invention. De manière caractéristique, selon ce procédé, on fixe le pêne du premier élément de fixation avec jeu selon deux directions orthogonales contenues dans le plan de la face inférieure du siège ;
- on fixe la gâche du premier élément de fixation sur le plancher du véhicule, l'orifice de la gâche étant en regard du pêne du premier élément de fixation ;
- on fixe le pêne du second élément de fixation sans jeu sous le siège, parallèlement au premier élément de fixation ; et
- on fixe la gâche du second élément de fixation sur le plancher en regard du pêne du second élément de fixation.

La présente invention sera mieux comprise à la lecture de la description qui suit d'un mode de réalisation particulier et qui fait référence aux dessins annexés suivants qui sont données à titre d'exemple non limitatif et sur lesquels :
- la figure 1 représente une vue du dessus d'une partie d'un élément de fixation d'un siège de véhicule automobile selon l'art antérieur ;
- la figure 2 représente une vue du dessus d'une partie d'un élément de fixation équipant un mode de réalisation particulier du dispositif de l'invention ;
- la figure 3 représente une vue en coupe de l'élément de fixation du dispositif de l'invention représenté sur la figure 2, lorsque celui-ci est fixé sur le siège et le plancher d'un véhicule automobile; et
- la figure 4 représente une vue schématique, du dessus, d'un mode de réalisation du dispositif de fixation de l'invention.

Les parties de l'élément de fixation selon de l'invention qui sont communs avec l'élément de fixation de l'art antérieur représenté sur la figure 1, sont référencées à l'identique.

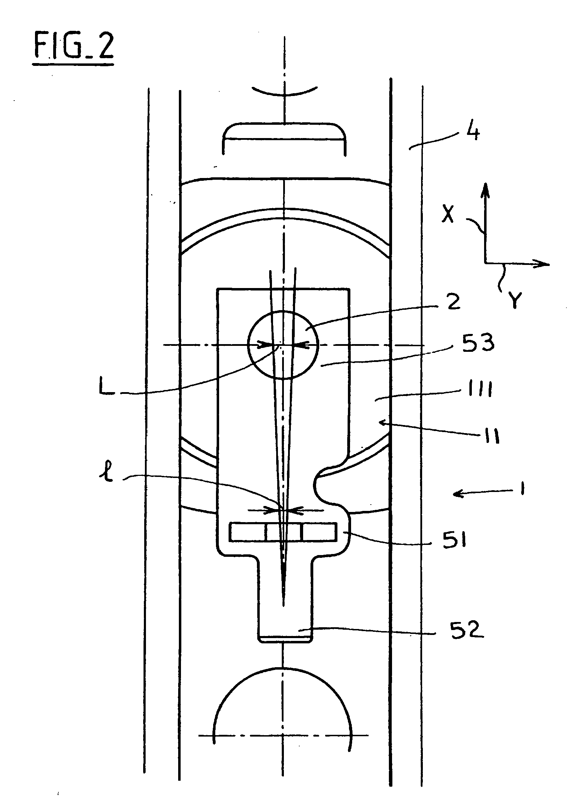

Ainsi, en référence à la figure 2 l'élément de fixation 1 comporte un pêne 11 qui comporte un corps creux 111 contenant une aiguille 2. La glissière 4 a des dimensions telles que le pêne 11 peut se déplacer selon l'axe des X (la longueur du support 3) et selon l'axe des Y. L'élément de fixation 1 est donc fixé avec jeu selon deux directions X et Y. La patte de déverrouillage 5 comporte une gâchette de déverrouillage 51, disposée à proximité de l'index 52 qui fait office de pivot. Cette gâchette 51 est disposée entre la partie d'actionnement 53 de la patte 5 qui coopère avec l'aiguille 2 et l'index de la gâchette 52. De cette manière, tout déplacement L du pêne 11 dans la direction Y n'engendre qu'un déplacement 1, limité de la gâchette 51 selon ce même axe ou direction. En effet, dans l'élément de fixation de l'art antérieur décrit sur la figure 1, la gâchette 51 étant éloignée du pivot 52, tout déplacement de la patte de déverrouillage 5 autour du pivot 52 entraîne un déplacement angulaire ou latéral de la gâchette 51 important provenant de l'éloignement de la gâchette par rapport au pivot 52 (prise d'angle). Dans le cas de l'élément de fixation de la présente invention, la gâchette étant proche du pivot 52, elle ne se déplace pas ou très peu lorsque le pêne se déplace selon la direction Y. Ainsi, à titre d'exemple, un déplacement L de 1mm à gauche ou à droite du pêne 11 selon la direction Y n'entraîne qu'un déplacement 1 de 0,2 mm de la gâchette de déverrouillage 51.

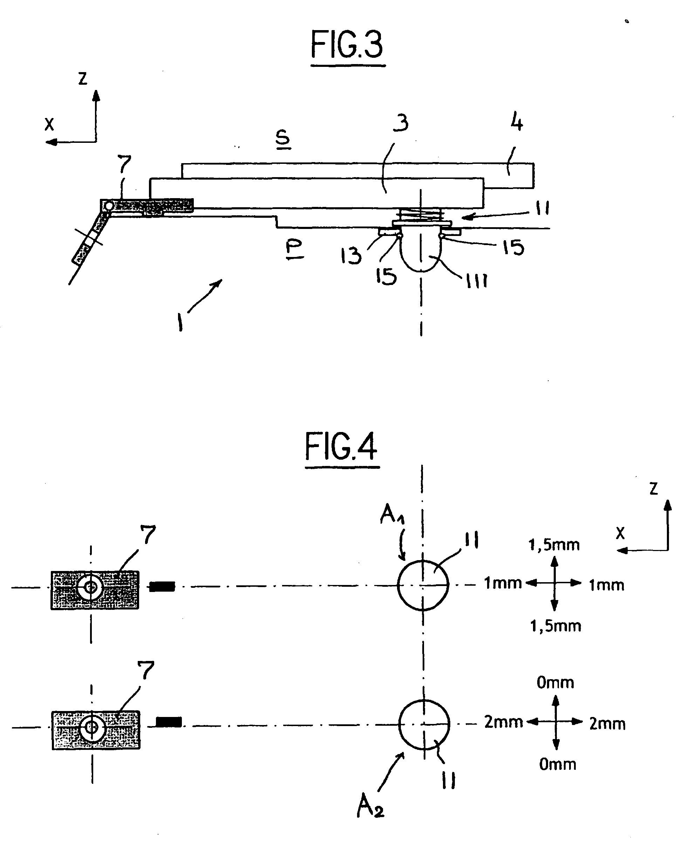

Comme représenté sur la figure 3, l'élément de fixation 1 est fixé dans une glissière 4 qui est fixée sans jeu sous le siège S. Le pêne 11 coopère avec une gâche 13 fixée sur le plancher P d'un véhicule automobile. Sur la figure 3, les billes 15 sont dans leur position verrouillée. L'élément de fixation 1 vient également en appui sur une charnière support 7 fixée sur le plancher P.

Le procédé de fixation du dispositif de fixation selon l'invention va maintenant être expliqué en référence à la figure 4.

Un premier élément de fixation A1, tel que décrit en référence aux figures 2 à 4, est inséré dans une glissière autorisant un jeu selon la direction X et un jeu selon la direction Y. Cette glissière est fixée sans jeu sur la face inférieure du siège. Un second élément de fixation A2 est inséré dans une glissière qui n'autorise aucun jeu selon la direction Y. Cette glissière est fixée sans jeu sur la face inférieure du siège, parallèlement à la glissière du premier élément de fixation A1. Ce second élément de fixation A2 peut être tel que décrit dans la présente invention ou tel que décrit dans l'art antérieur. On fixe ensuite les gâches des éléments de fixation A1 et A2, en regard des pênes de manière à ce que chacun des pênes puisse être emboîté dans l'orifice de sa gâche respective.

Les valeurs des jeux selon les directions X et Y sont indiquées à titre indicatif sur la figure 4. Ainsi, le premier élément de fixation peut être fixé avec un jeu d'une amplitude de 3mm selon Y et de 2mm selon X. Le second élément de fixation peut être fixé avec un jeu de 4mm selon X et sans jeu selon Y.

Le jeu du premier élément A1 permet de rattraper les jeux existants entre les deux éléments de fixation A1 et A2 sans avoir recours à une liaison rigide. Par ailleurs, ce jeu permet également d'assurer le fait que la bille de chacun des éléments de fixation A1 et A2 peut effectivement venir se placer dans sa position de verrouillage. De plus, la disposition de la gâchette de déverrouillage du premier élément de fixation permet d'assurer une bonne coopération avec le palonnier qui est guidé par la glissière, et ce, en dépit du jeu de l'élément de fixation A1 selon la direction Y.

Dans le cas du second élément de fixation A2, celui-ci étant fixé selon la direction Y, le palonnier vient toujours s'engager dans la gâchette de déverrouillage de cet élément de fixation.

## Revendications

1. Dispositif de fixation d'un siège de véhicule automobile qui comporte au moins un premier élément de fixation (1) du type comportant un pêne (11), destiné à être fixé sous ledit siège (S), et une gâche (13) destinée à être fixée sur le plancher (P) dudit véhicule et comprenant un orifice avec lequel peut coopérer ledit pêne (11), ledit pêne comportant un corps creux (111) contenant au moins une bille (15) et une aiguille (2), ladite bille étant mobile entre une position de verrouillage dans laquelle elle bloque le retrait dudit pêne (11) hors dudit orifice de ladite gâche (13), lorsque ledit pêne (11) est emboîté dans ladite gâche (13) et une position de déverrouillage dans laquelle ledit pêne (11) peut être séparé de ladite gâche (13), ladite aiguille (2) étant apte faire passer ladite bille (15) d'une desdites positions de verrouillage et de déverrouillage dans l'autre, ledit dispositif comportant, en outre, une patte de déverrouillage (5) qui s'étend dans un plan sensiblement perpendiculaire audit corps creux (111) et qui comporte une partie d'actionnement (53) qui coopère avec ladite aiguille (2) et une gâchette de déverrouillage (51) apte à coopérer avec un élément d'entraînement pour mouvoir ladite aiguille (2), ladite patte de déverrouillage (5) étant montée mobile en rotation dans ledit plan sensiblement perpendiculaire audit corps creux, autour d'un pivot (52), ledit dispositif est **caractérisé en ce que** ladite gâchette de déverrouillage (51) est disposée entre ladite partie d'actionnement (53) et ledit pivot (52), moyennant quoi, lorsque ledit élément de fixation (1) est fixé sous ledit siège (S) avec un jeu selon deux directions orthogonales (X ; Y) contenues dans le même plan que ladite patte de déverrouillage (5), le déplacement angulaire de ladite gâchette de déverrouillage (51) autour dudit pivot (52), qui est engendré par le déplacement en translation dudit pêne (11) selon une desdites directions (X ; Y), est limité ce qui permet à ladite gâchette de déverrouillage (51) de rester dans une position lui permettant de coopérer sûrement avec ledit élément d'entraînement.

2. Dispositif de fixation selon la revendication 1, **caractérisé en ce que** ladite gâchette de déverrouillage (51) est disposée au niveau dudit pivot (52).

3. Dispositif de fixation selon la revendication 1 ou 2, **caractérisé en ce que** ledit pivot (52) est disposé à une extrémité de ladite patte de déverrouillage (5).

4. Dispositif selon l'une quelconque des revendications 1 à 3, **caractérisé en ce que** ladite partie d'actionnement (53) est disposée à une extrémité de ladite patte de déverrouillage (5).

5. Dispositif selon l'une quelconque des revendications 1 à 4, **caractérisé en ce que** ledit élément de fixation (1) est disposé dans une glissière (4).

6. Dispositif de fixation selon l'une quelconque des revendications 1 à 5, **caractérisé en ce que** ledit élément de fixation (1) est fixé dans une glissière (4) de dimensions suffisantes pour permettre la fixation dudit élément de fixation (1) avec un jeu selon deux directions perpendiculaires (X ; Y) contenues dans le plan de ladite glissière (4).

7. Dispositif de fixation selon l'une quelconque des revendications 1 à 6, **caractérisé en ce que** ledit élément de fixation (1) comporte un support (3).

8. Dispositif de fixation selon la revendication 6 ou 7, **caractérisé en ce qu**'il comporte en outre un second élément de fixation (A2) du type comportant un pêne et une gâche, ledit pêne comportant un corps creux contenant une bille et une aiguille, ladite bille étant mobile entre une position de verrouillage dans laquelle ladite bille bloque le retrait dudit pêne emboîté dans ladite gâche, lorsque ledit pêne coopère avec ladite gâche, et une position de déverrouillage dans laquelle ledit pêne peut être séparé de ladite gâche, ladite aiguille étant apte à mettre en mouvement ladite bille entre lesdites positions de verrouillage et déverrouillage, ledit second élément de fixation (A2) étant fixé sous ledit siège, sans jeu.

9. Dispositif de fixation selon la revendication 8, **caractérisé en ce que** ledit second élément de fixation (A2) est fixé dans une glissière sous ledit siège (S).

10. Procédé de montage d'un dispositif de fixation selon la revendication 8 ou 9, **caractérisé en ce que** :
- on fixe le pêne (11) dudit premier élément de fixation (A1) avec jeu selon deux directions orthogonales (X ; Y) contenues dans le plan de la face inférieure dudit siège ;
- on fixe ladite gâche dudit premier élément de fixation (A1) sur le plancher dudit véhicule (P), ledit orifice de ladite gâche (13) étant en regard dudit pêne (11) dudit premier élément de fixation (A1);
- on fixe ledit pêne dudit second élément de fixation (A2), sans jeu sous ledit siège, parallèlement audit premier élément de fixation (A1) ;
- on fixe ladite gâche dudit second élément de fixation (A2) sur ledit plancher (P) en regard dudit pêne dudit second élément de fixation (A2) ; et
- on dispose une gâchette de déverrouillage (51) entre la partie d'actionnement (53) et le pivot (52).

## Claims

1. Apparatus for fastening an automotive vehicle seat, comprising at least one first fastening element (1) of the type comprising a latch bolt (11), designed to be fixed underneath said seat (S), and a strike (13) designed to be fixed to the floor (P) of said vehicle and comprising a hole in which said latch bolt (11) can engage, said latch bolt comprising a hollow body (111) containing at least one ball (15) and a pin (2), said ball being movable between a locked position in which it prevents withdrawal of said latch bolt (11) from said hole of said strike (13) when said latch bolt (11) is inserted in said strike (13) and a released position in which said latch bolt (11) can be separated from said strike (13), said pin (2) being capable of moving said ball (15) from either of said locked and unlocked positions to the other, and said apparatus also comprising a release plate (5) that extends in a plane approximately perpendicular to said hollow body (111) and that comprises an actuating part (53) that interacts with said pin (2) and a release trigger (51) designed to act on a drive element to move said pin (2), and said release plate (5) being rotatable in said plane approximately perpendicular to said hollow body, about a pivot (52), said apparatus being **characterized in that** said release trigger (51) is located between said actuating part (53) and said pivot (52), such that, when said fastening element (1) is fixed underneath said seat (S) with freedom of movement in two orthogonal directions (X; Y) both contained in the same plane as said release plate (5), the angular movement of said release trigger (51) about said pivot (52), which is caused by the translational movement of said latch bolt (11) in one of said directions (X; Y), is limited, so allowing said release trigger (51) to remain in a position in which it is enabled to act reliably on said drive element.

2. Fastening apparatus according to Claim 1, **characterized in that** said release trigger (51) is located in the vicinity of said pivot (52).

3. Fastening apparatus according to Claim 1 or 2, **characterized in that** said pivot (52) is located at one end of said release plate (5).

4. Apparatus according to any one of Claims 1 to 3, **characterized in that** said actuating part (53) is located at one end of said release plate (5).

5. Apparatus according to any one of Claims 1 to 4, **characterized in that** said fastening element (1) is located in a track (4).

6. Fastening apparatus according to any one of Claims 1 to 5, **characterized in that** said fastening element (1) is fixed in a track (4) of dimensions sufficient to allow fixing of said fixing element (1) with freedom of movement in two perpendicular directions (X; Y) both contained in the plane of said track (4).

7. Fastening apparatus according to any one of Claims 1 to 6, **characterized in that** said fastening element (1) comprises a support (3).

8. Fastening apparatus according to Claim 6 or 7, **characterized in that** it also comprises a second fastening element (A2) of the type with a latch bolt and a strike, said latch bolt comprising a hollow body containing a ball and a pin, said ball being movable between a locked position in which said ball prevents said latch bolt, inserted in said strike, from being retracted when said latch bolt is engaged with said strike, and an unlocked position in which said latch bolt can be separated from said strike, said pin being able to move said ball between said locked and unlocked positions, and said second fastening element (A2) being fixed underneath said seat, without freedom of movement.

9. Fastening apparatus according to Claim 8, **characterized in that** said second fastening element (A2) is fixed in a track underneath said seat (S).

10. Method of mounting a fastening apparatus according to Claim 8 or 9, **characterized in that**:
- the latch bolt (11) of said first fastening element (A1) is fixed with freedom of movement in two orthogonal directions (X; Y) both contained in the plane of the lower face of said seat;
- said strike of said first fastening element (A1) is fixed to the floor of said vehicle (P), said hole of said strike (13) being opposite said latch bolt (11) of said first fastening element (A1);
- said latch bolt of said second fastening element (A2) is fixed without freedom of movement underneath said seat, parallel to said first fastening element (A1);
- said strike of said second fastening element (A2) is fixed to said floor (P) opposite said latch bolt of said second fastening element (A2); and
- a release trigger (51) is located between the actuating part (53) and the pivot (52).

## Patentansprüche

1. Vorrichtung zur Befestigung eines Kraftfahrzeugsitzes, die mindestens ein erstes Befestigungselement (1) von dem Typ aufweist, der einen Riegel (11), das dazu bestimmt ist, unter dem Sitz (S) befestigt zu werden, und ein Schließblech (13) aufweist, das dazu bestimmt ist, am Boden (P) des Fahrzeugs befestigt zu werden und eine Öffnung aufweist, mit der der Riegel (11) zusammenwirken kann, wobei der Riegel (11) einen Hohlkörper (111) aufweist, der mindestens eine Kugel (15) und eine Nadel (2) enthält, wobei die Kugel zwischen einer Verriegelungsstellung, in der sie das Zurückziehen des Riegels (11) aus der Öffnung des Schließblechs (13) blockiert, wenn der Riegel (11) in das Schließblech (13) eingefügt ist, und einer Entriegelungsstellung beweglich ist, in der der Riegel (11) vom Schließblech (13) getrennt werden kann, wobei die Nadel (2) fähig ist, die Kugel (15) von einer der Verriegelungs- und Entriegelungsstellungen in die andere übergehen zu lassen, wobei die Vorrichtung außerdem eine Entriegelungslasche (5) aufweist, die sich in einer Ebene im Wesentlichen lotrecht zum Hohlkörper (111) erstreckt und einen Betätigungsteil (53), der mit der Nadel (2) zusammenwirkt, und einen Entriegelungsdrücker (51) aufweist, der mit einem Antriebselement zusammenwirken kann, um die Nadel (2) zu bewegen, wobei die Entriegelungslasche (5) in der im Wesentlichen zum Hohlkörper lotrechten Ebene um einen Drehzapfen (52) drehbeweglich angeordnet ist, wobei die Vorrichtung **dadurch gekennzeichnet ist, dass** der Entriegelungsdrücker (51) zwischen dem Betätigungsteil (53) und dem Drehzapfen (52) angeordnet ist, wodurch, wenn das Befestigungselement (1) unter dem Sitz (S) mit einem Spiel in zwei orthogonalen Richtungen (X; Y) befestigt ist, die in der gleichen Ebene liegen wie die Entriegelungslasche (5), die Winkelverschiebung des Entriegelungsdrückers (51) um den Drehzapfen (52), die von der Translationsverschiebung des Riegels (11) in einer der Richtungen (X; Y) ausgelöst wird, begrenzt ist, was es dem Entriegelungsdrücker (51) erlaubt, in einer Stellung zu bleiben, die es ihm ermöglicht, sicher mit dem Antriebselement zusammenzuwirken.

2. Befestigungsvorrichtung nach Anspruch 1, **dadurch gekennzeichnet, dass** der Entriegelungsdrücker (51) in Höhe des Drehzapfens (52) angeordnet ist.

3. Befestigungsvorrichtung nach Anspruch 1 oder 2, **dadurch gekennzeichnet, dass** der Drehzapfen (52) an einem Ende der Entriegelungslasche (5) angeordnet ist.

4. Befestigungsvorrichtung nach einem der Ansprüche 1 bis 3, **dadurch gekennzeichnet, dass** der Betätigungsteil (53) an einem Ende der Entriegelungslasche (5) angeordnet ist.

5. Befestigungsvorrichtung nach einem der Ansprüche 1 bis 4, **dadurch gekennzeichnet, dass** das Befestigungselement (1) in einer Gleitschiene (4) angeordnet ist.

6. Befestigungsvorrichtung nach einem der Ansprüche 1 bis 5, **dadurch gekennzeichnet, dass** das Befestigungselement (1) in einer Gleitschiene (4) mit ausreichenden Abmessungen befestigt ist, um die Befestigung des Befestigungselements (1) mit einem Spiel in zwei lotrechten Richtungen (X; Y) zu erlauben, die in der Ebene der Gleitschiene (4) enthalten sind.

7. Befestigungsvorrichtung nach einem der Ansprüche 1 bis 6, **dadurch gekennzeichnet, dass** das Befestigungselement (1) einen Träger (3) aufweist.

8. Befestigungsvorrichtung nach Anspruch 6 oder 7, **dadurch gekennzeichnet, dass** sie außerdem ein zweites Befestigungselement (A2) von dem Typ aufweist, der einen Riegel und ein Schließblech aufweist, wobei der Riegel einen Hohlkörper aufweist, der eine Kugel und eine Nadel enthält, wobei die Kugel zwischen einer Verriegelungsstellung, in der die Kugel das Zurückziehen des in das Schließblech eingeführten Riegels verhindert, wenn der Riegel mit dem Schließblech zusammenwirkt, und einer Entriegelungsstellung beweglich ist, in der der Riegel vom Schließblech getrennt werden kann, wobei die Nadel die Kugel zwischen den Verriegelungs- und Entriegelungsstellungen in Bewegung versetzen kann, wobei das zweite Befestigungselement (A2) ohne Spiel unter dem Sitz befestigt ist.

9. Befestigungsvorrichtung nach Anspruch 8, **dadurch gekennzeichnet, dass** das zweite Befestigungselement (A2) in einer Gleitschiene unter dem Sitz (S) befestigt ist.

10. Montageverfahren einer Befestigungsvorrichtung nach Anspruch 8 oder 9, **dadurch gekennzeichnet, dass**:
- der Riegel (11) des ersten Befestigungselements (A1) mit Spiel gemäß zwei orthogonalen Richtungen (X; Y) befestigt wird, die in der Ebene der Unterseite des Sitzes enthalten sind;
- das Schließblech des ersten Befestigungselements (A1) am Boden (P) des Fahrzeugs befestigt wird, wobei die Öffnung des Schließblechs (13) sich gegenüber dem Riegel (11) des ersten Befestigungselements (A1) befindet;
- der Riegel des zweiten Befestigungselements (A2) ohne Spiel unter dem Sitz parallel zum ersten Befestigungselement (A1) befestigt wird;
- das Schließblech des zweiten Befestigungselements (A2) am Boden (P) gegenüber dem Riegel des zweiten Befestigungselements (A2) befestigt wird; und
- ein Entriegelungsdrücker (51) zwischen dem Betätigungsteil (53) und dem Drehzapfen (52) angeordnet wird.
